# EUROPEAN PATENT APPLICATION

(11) **EP 4 361 669 A2**
(43) Date of publication of application: **01.05.2024**
(21) Application number: 23196958.5
(22) Date of filing: 12.09.2023
(51) Int. Cl.: G01S 7/481, G02B 6/26, G02B 6/30, G01S 17/42

(54) **TRANSMITTER MODULE AND TRANSCEIVER MODULE FOR LIDAR, LIDAR, AND SYSTEM**

(30) Priority: 31.10.2022 CN 202211348621
(71) Applicant: Innovusion (Suzhou) Co., Ltd., Suzhou, Jiangsu 215000 (CN)
(72) Inventor: ZHAI, Xiongfei, SUZHOU CITY, 215000, (CN); LU, Lirui, SUZHOU CITY, 215000 (CN)
(74) Representative: Sackin, Robert

(57) **Abstract**

The present disclosure provides a transmitter module (110), a transceiver module for a lidar (1000), a lidar and a system. The transmitter module (110) includes a laser emitter (111), an optical splitter (112), and a collimation assembly (115). The laser emitter (111) is configured to emit a laser beam. The optical splitter (112) is located in an outgoing path of the laser beam and is configured to receive the laser beam and split the laser beam into a plurality of split beams. The collimation assembly (115) is located in outgoing paths of the split beams and is configured to receive the split beams and collimate the split beams into collimated beams. This enables the lidar to implement multi-line scanning and detection at low cost.

## Description

### TECHNICAL FIELD

The present disclosure relates to the lidar field, and more particularly, to a transmitter module and a transceiver module for a lidar, a lidar, and a system.

### BACKGROUND

Lidar is becoming an indispensable and important technical component in autonomous vehicles and intelligent transportation technology. Taking an autonomous vehicle as an example, lidar is usually used to detect the surroundings of the vehicle, so as to obtain information about the road, the attitude of surrounding vehicles, and other obstacles, which is used to guide and control the steering and speed of the vehicle. In order to adequately detect complex road conditions and surroundings, in some cases, a lidar is provided with a plurality of laser emitters and a plurality of laser receivers, so that the lidar can emit a plurality of laser beams for detection. However, it is costly to use such a lidar.

### SUMMARY

The objective of the present disclosure is to provide a solution, which enables a lidar to implement multi-line scanning and detection at low cost.

According to a first aspect of the embodiments of the present disclosure, there is provided a transmitter module for a lidar, including a laser emitter, an optical splitter, and a collimation assembly. The laser emitter is configured to emit a laser beam. The optical splitter is located in an outgoing path of the laser beam and is configured to receive the laser beam and split the laser beam into a plurality of split beams. The collimation assembly is located in outgoing paths of the split beams and is configured to receive the split beams and collimate the split beams into collimated beams.

According to a second aspect of the embodiments of the present disclosure, there is provided a transceiver module for a lidar, including a receiver module and a transmitter module as described above. The transmitter module is configured to emit collimated beams onto an object. The receiver module is configured to receive echo beams reflected or scattered by the obj ect.

According to a third aspect of the embodiments of the present disclosure, there is provided a lidar, including a transceiver module as described above, a scanning module, and a detector. The transceiver module includes a transmitter module and a receiver module. The scanning module is configured to direct collimated beams emitted from the transmitter module to scan the surroundings. The detector is configured to perform photoelectric conversion based on echo beams received by the receiver module.

According to a fourth aspect of the embodiments of the present disclosure, there is provided a vehicle system, including a lidar as described above.

According to one or more embodiments of the present disclosure, this enables the lidar to implement multi-line scanning and detection at low cost.

### BRIEF DESCRIPTION OF THE DRAWINGS

The drawings illustrate embodiments and form a part of the specification, and are used to describe example implementations of the embodiments together with a written description of the specification. The embodiments shown are merely for illustrative purposes and do not limit the scope of the claims. Throughout the drawings, identical reference numerals denote identical elements or similar but not necessarily identical elements.
FIG. 1 is a schematic diagram of the principle of a lidar according to an embodiment of the present disclosure;
FIG. 2 is a schematic diagram of an optical path of a lidar according to an embodiment of the present disclosure;
FIG. 3 is a schematic diagram of an optical path of an integrated optical waveguide and a collimation assembly in FIG. 2;
FIG. 4 is a schematic diagram of an optical path of another lidar according to an embodiment of the present disclosure;
FIG. 5 is a schematic diagram of an optical path of yet another lidar according to an embodiment of the present disclosure;
FIG. 6 is a schematic sectional view of an optical fiber array in a lidar according to an embodiment of the present disclosure;
FIG. 7 is a schematic sectional view of another optical fiber array in a lidar according to an embodiment of the present disclosure; and
FIG. 8 is a schematic sectional view of yet another optical fiber array in a lidar according to an embodiment of the present disclosure.

### List of reference numerals:

1000: lidar;
100: transceiver module;
110: transmitter module; 111: laser emitter; 112: optical splitter; 113: integrated optical waveguide; 1131: coupling member; 114: optical fiber array; 1141a, 1141b: substrate; 1142a, 1142b: cover plate; 1143, 1143a, 1143b, 1143c: output optical fiber; 1144: groove portion; 1145: placement groove; 1146: first accommodating groove; 1147: second accommodating groove; 1148: input optical fiber; 115: collimation assembly; 1151: first lens; 1152: second lens; 116: coupling assembly; 117: coupler; 118, 118a, 118b: collimated beams; 119: echo beams;
120: receiver module;
200: scanning module;
300: detector;
2000: object.

### DETAILED DESCRIPTION OF EMBODIMENTS

The present disclosure will be further described in detail below with reference to the drawings and embodiments. It can be understood that specific embodiments described herein are used merely to explain a related invention, rather than limit the invention. It should be additionally noted that, for ease of description, only parts related to the related invention are shown in the drawings.

It should be noted that the embodiments in the present disclosure and features in the embodiments can be combined with each other without conflict. If the number of elements is not specifically defined, there may be one or more elements, unless otherwise expressly indicated in the context. In addition, numbers of steps or functional modules used in the present disclosure are used merely to identify the steps or functional modules, rather than limit either a sequence of performing the steps or a connection relationship between the functional modules.

In the present disclosure, unless otherwise stated, the terms "first", "second", etc., used to describe various elements are not intended to limit the positional, temporal or importance relationship of these elements, but rather only to distinguish one element from another. In some examples, the first element and the second element may refer to the same instance of the element, and in some cases, based on contextual descriptions, the first element and the second element may also refer to different instances.

The terms used in the description of the various examples in the present disclosure are for the purpose of describing particular examples only and are not intended to be limiting. If the number of elements is not specifically defined, there may be one or more elements, unless otherwise expressly indicated in the context. Moreover, the term "and/or" used in the present disclosure encompasses any of and all possible combinations of listed items.

In the related art, a lidar is provided with a plurality of laser emitters each emitting one laser beam to an object and a plurality of laser receivers, and the plurality of laser emitters and the plurality of laser receivers are arranged in a linear array or a planar array. As such, the lidar can emit multi-line lasers, so as to detect a plurality of objects. However, the lidar has a complex structure and is costly due to its plurality of laser emitters and receivers. Moreover, the inventors also found that, in order to make a one-to-one correspondence between the plurality of laser emitters and the plurality of laser receivers, complex optical path adjustments are required for the laser emitters and the laser receivers, resulting in a complicated installation process.

In view of this, the inventors have found the cause for the above-mentioned problems of the lidar, i.e., each laser emitter emits one laser beam, and it is required to provide a plurality of laser emitters to emit a plurality of laser beams. Based on this, the inventors have envisaged converting, using optical principles, one laser beam emitted by the laser emitter into a plurality of laser beams. Enlightened by such a technical concept, a transmitter module for a lidar is finally designed by the inventors, which uses an optical splitter to spit one laser beam into a plurality of split beams.

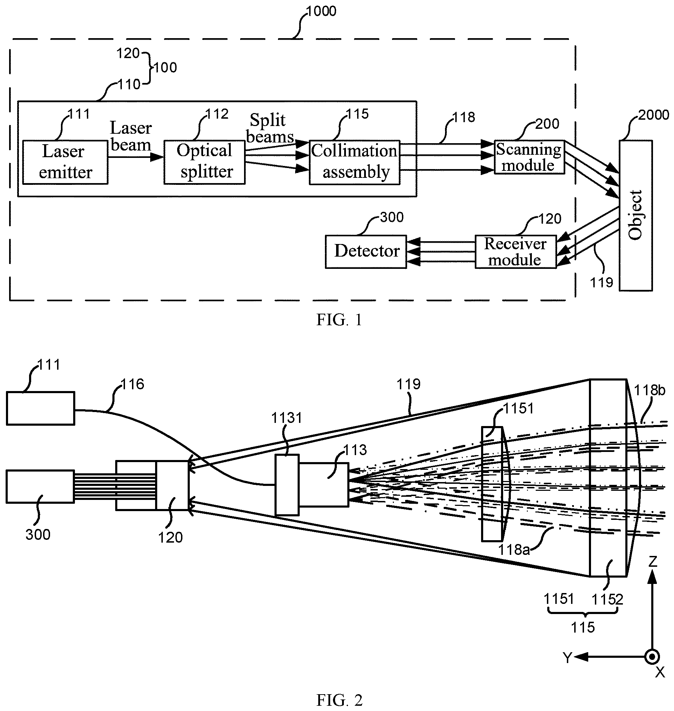

FIG. 1 is a schematic diagram of the principle of a lidar 1000 according to an embodiment of the present disclosure. Referring to FIG. 1, an embodiment of the present disclosure provides a lidar 1000, which may be applied in a wide range of fields, including but not limited to: intelligent transportation, intelligent driving vehicles, intelligent driving aircrafts, 3D printing, virtual reality (VR), augmented reality (AR), and service robots, etc.

The lidar 1000 may include a transceiver module 100, a scanning module 200, and a detector 300, where the transceiver module 100 mainly includes a transmitter module 110 and a receiver module 120. The transmitter module 110 is configured to be able to emit a plurality of collimated beams 118. The scanning module 200 is configured to direct the plurality of collimated beams 118 to a specific direction. The scanning module 200 may direct the emitted collimated beams 118 along different paths, so that the lidar 1000 can scan the surroundings. After reaching a surrounding object 2000, each of the collimated beams 118 is reflected or scattered to form echo beams 119. The receiver module 120 is configured to receive the plurality of echo beams 119 reflected or scattered by the object 2000. The detector 300 is configured to perform photoelectric conversion on the echo beams 119 based on the echo beams 119 received by the receiver module 120. The distance, orientation, height, speed, attitude, shape, and other characteristic quantities of the object 2000 can be determined based on the plurality of collimated beams 118 emitted by the lidar and the returned echo beams 119. The plurality of collimated beams 118 and the plurality of echo beams 119 may have a one-to-one correspondence, and the receiver module 120 can receive the echo beam 119 corresponding to each collimated beam 118.

The scanning module 200 can change the directionality of the beams to detect objects 2000 in different positions and directions, so that the lidar 1000 has a large field of view for detection. In some embodiments, the scanning module 200 may specifically include a rotating mirror and a vibrating mirror. The rotating mirror can steer the collimated beams 118 through rotation movement, and for example, may be used to scan one or more signals in a horizontal direction of the lidar 1000. The vibrating mirror can steer the collimated beams 118 through vibration movement, and for example, may be used to scan one or more signals in a vertical direction of the lidar 1000.

The transmitter module 110 according to an embodiment of the present disclosure is described below with reference to the drawings.

Still referring to FIG. 1, the transmitter module 110 for the lidar 1000 includes a laser emitter 111, an optical splitter 112, and a collimation assembly 115. The laser emitter 111 is configured to emit a laser beam. The optical splitter 112 is located in an outgoing path of the laser beam and is configured to receive the laser beam and split the laser beam into a plurality of split beams. The collimation assembly 115 is located in outgoing paths of the split beams and is configured to receive the split beams and collimate the split beams into collimated beams 118.

The laser emitter 111 serves as a light source for emitting a laser beam. A type of the laser emitter 111 includes, but is not limited to, a fiber laser and a semiconductor laser. When the laser emitter 111 is a semiconductor laser, the laser emitter 111 may be, for example, an edge-emitting semiconductor laser or a surface-emitting semiconductor laser. When the laser emitter 111 is an edge-emitting semiconductor laser, the laser emitter may be specifically a pulsed laser diode (PLD). When the laser emitter 111 is a surface-emitting semiconductor laser, the laser emitter may be specifically a distributed feedback laser, a Fabry-Perot laser, etc.

The optical splitter 112 may be configured to split one laser beam into four, eight, sixteen, or thirty-two split beams, etc., which is not limited in the embodiments.

It should be understood that, a beam has a specific divergence angle, i.e., a distance between two adjacent rays in the beam becomes larger along an outgoing path of the beam, and the divergence angle can be used to characterize the degree of divergence of the beam outward from its center. The collimation assembly 115 can adjust divergence angles of the received split beams to be smaller, so as to obtain the collimated beams 118 that have smaller divergence angles.

For example, the optical splitter 112 can split one laser beam into four split beams. The collimation assembly 115 can collimate the four split beams to obtain four collimated beams 118. The four collimated beams 118 are propagated onto the object 2000 and are reflected by a surface of the object 2000 to produce four echo beams 119. Each of the four echo beams 119 can be received by the receiver module 120 and sent to the detector 300, so that the lidar 1000 can perform four-line scanning and detection.

It can be seen that, in this embodiment according to the present disclosure, by means of the disposition of the optical splitter 112, the transmitter module 110 can split one laser beam into a plurality of split beams, so that the lidar 1000 having the transmitter module 110 can implement multi-line laser scanning. On the premise that the number of beams emitted by the transmitter module 110 of the lidar 1000 is unchanged or increased, the transmitter module 110 of this embodiment of the present disclosure can implement multi-line scanning and detection by using a small number of laser emitters 111 (for example, only one laser emitter 111), so that the number of laser emitters 111 required is reduced, and the transmitter module 110 has a simple structure, which is beneficial to reduce the cost. Further, due to the reduction of the number of laser emitters 111, the adjustment process for the optical paths between the laser emitter 111 and the receiver module 120 is simplified, which is beneficial to reduce the adjustment cost.

Moreover, by means of the disposition of the collimation assembly 115, the transmitter module 110 of this embodiment of the present disclosure can collimate the split beams to obtain the collimated beams 118, and the collimated beams 118 have small divergence angles, which leads to a long propagation distance of the collimated beams 118, thus facilitating the detection of an object 2000 at a long distance.

Certainly, in some embodiments, the transmitter module 110 may be alternatively provided with a plurality of laser emitters 111. For example, the transmitter module 110 may be provided with N laser emitters 111, and N laser beams may be emitted, each of which may be split by the optical splitter 112 into M split beams, for example, so that N×M beams may be emitted by the transmitter module 110, where both N and M are positive integers. Here, N optical splitters 112 may be provided, and each laser emitter 111 corresponds to one optical splitter 112. Alternatively, the optical splitter 112 may be designed to correspond to a plurality of laser emitters 111, so as to receive and split a plurality of laser beams.

As such, the number of beams emitted by the transmitter module 110 can be greatly increased, and thus the number of spatial scanning lines of the lidar 1000 having the transmitter module 110 can be greatly increased.

It should also be noted that, the implementation of the optical splitter 112 includes, but is not limited to, the following possibilities.

FIG. 2 is a schematic diagram of an optical path of a lidar 1000 according to an embodiment of the present disclosure. Referring to FIG. 2, in some possible implementations, the optical splitter 112 may be an integrated optical waveguide 113. The integrated optical waveguide 113 has an incident end (left end in FIG. 2) and an outgoing end (right end in FIG. 2). The laser beam is emitted into the integrated optical waveguide 113 through the incident end, and the integrated optical waveguide 113 can guide the laser beam to propagate therein, so as to produce a plurality of split beams. The plurality of split beams are emitted out through the outgoing end. For example, the integrated optical waveguide 113 is not limited to a planar dielectric optical waveguide or a slab dielectric optical waveguide. The integrated optical waveguide 113 may be constructed such that its splitting ratio is 1:2, 1:4, 1:8, 1:16, 1:32, 1:64, etc., depending on actual working conditions. When the splitting ratio of the integrated optical waveguide 113 is 1:32, the integrated optical waveguide 113 can split one laser beam into 32 split beams.

The number of integrated optical waveguides 113 may be designed reasonably according to parameters such as a beam radius of the laser beam, as long as all the laser beams can be projected into the integrated optical waveguides 113. In some embodiments, a plurality of integrated optical waveguides 113 may be provided, forming an optical waveguide group. The plurality of integrated optical waveguides 113 may be arranged in an X direction and a Z direction in FIG. 2, where any two of the three directions X, Y, and Z are perpendicular to each other.

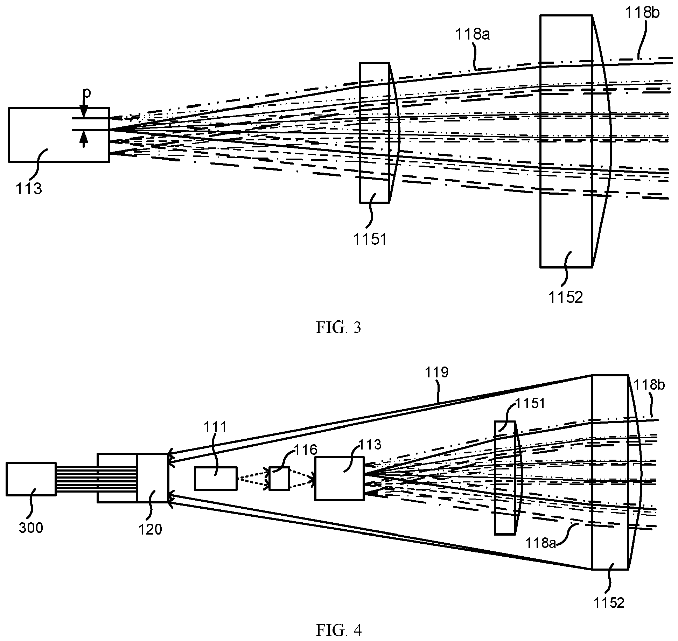

FIG. 3 is a schematic diagram of an optical path of the integrated optical waveguide 113 and the collimation assembly 115 in FIG. 2. As shown in FIG. 3, the outgoing end of the integrated optical waveguide 113 has a plurality of outgoing points, which correspond to the plurality of split beams. Each of the split beams is emitted out from a respective outgoing point. It should be noted that, positions of the outgoing points of the integrated optical waveguide 113 may be designed according to requirements and actual working conditions, and since a spacing between two adjacent outgoing points is related to positions of the outgoing points, the spacing between the two adjacent outgoing points may be designed. As such, an optical pitch between two split beams emitted out from two adjacent outgoing points may be controlled and adjusted, so that angles between the plurality of collimated beams 118 can be controlled. Therefore, the spacing between two adjacent outgoing points and the positions of the outgoing points may be designed to be small, so that the optical pitch (indicated by p in FIG. 3) between two adjacent split beams is small, the angles between the collimated beams 118 tend to be 0 degrees, and the plurality of collimated beams 118 tend to be parallel, thus facilitating small divergence angles of the split beams and long-distance propagation of the split beams.

According to some embodiments of the present disclosure, the transmitter module 110 may further include a coupling assembly 116 disposed between the laser emitter 111 and the optical splitter, e.g., the integrated optical waveguide 113, and configured to couple the laser beam into the optical splitter, e.g., the integrated optical waveguide 113. A laser beam emitted by the laser emitter 111 propagates into the integrated optical waveguide 113 via the coupling assembly 116. With such a disposition, the coupling assembly 116 may couple the laser beam into the integrated optical waveguide 113, so as to avoid large optical loss during the propagation of the laser beam as much as possible.

For example, in the example shown in FIG. 2, the coupling assembly 116 may be an optical fiber, so that the integrated optical waveguide 113 and the laser emitter 111 are coupled by the optical fiber, and the laser beam propagates into the integrated optical waveguide 113 via the optical fiber. In the implementation where the coupling assembly 116 is an optical fiber, the transmitter module 110 may be further provided with a coupling member 1131, the optical fiber is connected to the laser emitter 111 at one end, and is connected to the coupling member 1131 at the other end, and the coupling member 1131 is coupled to the integrated optical waveguide 113.

FIG. 4 is a schematic diagram of an optical path of another lidar 1000 according to an embodiment of the present disclosure. For another example, in an example shown in FIG. 4, the coupling assembly 116 may alternatively include a lens assembly. The lens assembly may consist of one or more lenses, the number and size of which depend on the divergence angle of the laser beam and the distance between the laser emitter 111 and the lens assembly along the outgoing path. When the lens assembly consists of one lens, the lens has a focusing effect. When the lens assembly consists of a plurality of lenses, the plurality of lenses may be arranged in an array along the outgoing path, a lens closest to the integrated optical waveguide 113 has a focusing effect, and the rest of the lenses may be configured to collimate the laser beam.

Compared with the coupling assembly 116 being an optical fiber, in the technical solution where the coupling assembly 116 includes a lens assembly, the lens assembly and the laser emitter 111 do not need to be coupled by the optical fiber, but it is sufficient to place the lens assembly downstream of the laser emitter 111, thus providing a higher coupling efficiency and a larger displacement space in an emitting path of each component.

Still referring to FIGS. 2 and 4, in the implementation where the optical splitter 112 is the integrated optical waveguide 113, the transmitter module 110 may further include a first spot-size converter disposed inside the integrated optical waveguide 113 and located at the incident end of the integrated optical waveguide 113. The laser beam propagates to the incident end of the integrated optical waveguide 113. The first spot-size converter receives the laser beam, and can convert the laser beam from a small divergence angle and a large spot size to a large divergence angle and a small spot size and then guide the laser beam into the integrated optical waveguide 113. As such, when the laser emitter 111 emits a high-power laser beam, the first spot-size converter can increase a divergence angle of the laser beam to reduce energy density of the laser beam, which can effectively reduce the risk of burn-out of the incident end due to the direct projection of a laser beam with a small divergence angle and a large spot size into the incident end. Moreover, the first spot-size converter can additionally improve the coupling efficiency between the integrated optical waveguide 113 and the coupling assembly 116.

Alternatively, in other embodiments, the transmitter module 110 may further include a second spot-size converter disposed inside the integrated optical waveguide 113 and located at the outgoing end of the integrated optical waveguide 113. The second spot-size converter can improve the coupling efficiency between the integrated optical waveguide 113 and the collimation assembly 115. The integrated optical waveguide 113 guides the laser beam with a large divergence angle and a small spot size to propagate therein, so as to produce a plurality of split beams with large divergence angles and small spot sizes. The second spot-size converter receives the plurality of split beams, and converts the split beams from large divergence angles and small spot sizes to small divergence angles and large spot sizes and then guides the split beams out of the outgoing end, so that the divergence angles of the split beams are reduced to increase the energy density of the split beams emitted out.

Certainly, in some embodiments, the transmitter module 110 may be alternatively provided with both the first spot-size converter and the second spot-size converter.

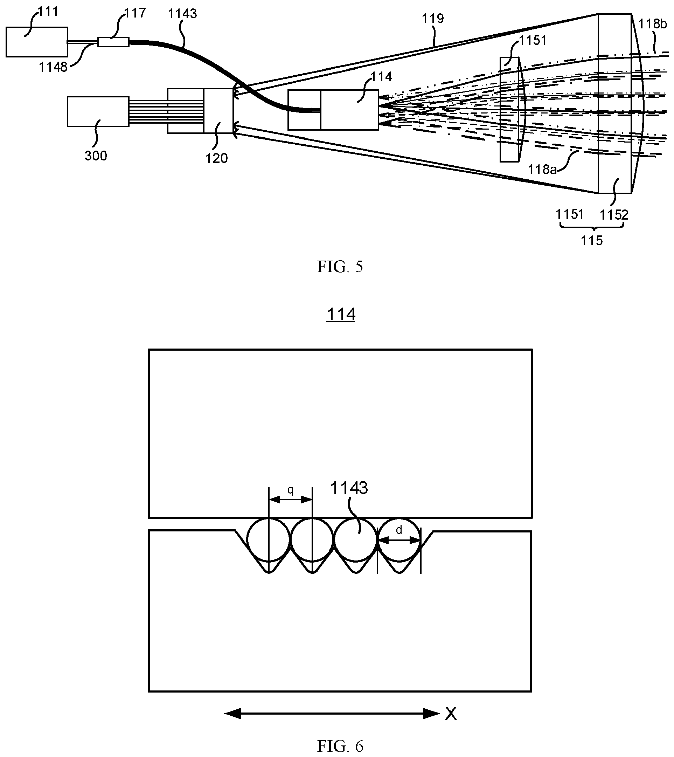

FIG. 5 is a schematic diagram of an optical path of yet another lidar 1000 according to an embodiment of the present disclosure. Referring to FIG. 5, in some other possible implementations, the optical splitter 112 may include an input optical fiber 1148, a coupler 117, and an optical fiber array 114 having a plurality of output optical fibers 1143, the laser emitter 111 is coupled to the coupler 117 via the input optical fiber 1148, and the coupler 117 is connected to the plurality of output optical fibers 1143.

In the above implementation, the general working principle of the transmitter module 110 is as follows: The laser emitter 111 emits a laser beam, which propagates to the coupler 117 through the input optical fiber 1148.The coupler 117 couples the laser beam to the optical fiber array 114. The optical fiber array 114, due to its plurality of output optical fibers 1143, can decompose the laser beam into a plurality of split beams, each of which propagates to the collimation assembly 115 through a corresponding output optical fiber 1143.

The number of split beams is equal to the number of output optical fibers 1143. Two output optical fibers 1143 may be provided, and the optical splitter 112 may split a laser beam into two split beams accordingly. In other embodiments, the number of output optical fibers 1143 may alternatively be 4, 8, 16, etc. A diameter d of the output optical fiber 1143 may be 125 micrometers (µm) or 250 µm.

It can be understood that, in this embodiment, an optical pitch p between two adjacent split beams depends on a center-to-center distance between the two adjacent output optical fibers 1143. By designing a small center-to-center distance of two adjacent output optical fibers 1143, the optical pitch p between two adjacent split beams is reduced accordingly, thus reducing the angles between the plurality of collimated beams 118.

FIG. 6 is a schematic sectional view of an optical fiber array 114 in a lidar 1000 according to an embodiment of the present disclosure. Referring to FIG. 6, a plurality of output optical fibers 1143 in the optical fiber array 114 may be arranged in a row in the X direction in FIG. 6, and every two adjacent output optical fibers 1143 press against each other. In this example, a center-to-center distance q between two adjacent output optical fibers 1143 in the X direction is a diameter d of the output optical fiber 1143, so that a minimum of the optical pitch p between two adjacent split beams may be d.

In other embodiments of the present disclosure, the optical fiber array 114 may further be configured to include a plurality of rows of output optical fibers 1143 arranged in a first direction, each row having a plurality of output optical fibers 1143 disposed in a second direction, output optical fibers 1143 in two adjacent rows are staggered, a minimum of a center-to-center distances between two output optical fibers 1143 in the second direction is a first spacing, and a minimum spacing between two adjacent output optical fibers 1143 in the same row in the second direction is a second spacing, the first spacing being less than the second spacing. The first direction is perpendicular to the second direction.

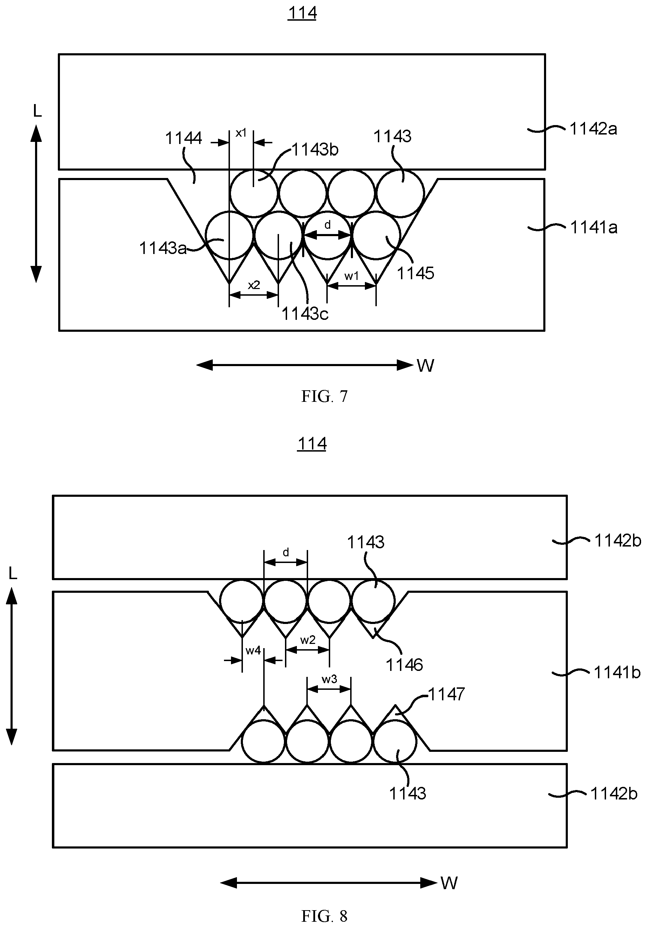

FIG. 7 is a schematic sectional view of another optical fiber array 114 in a lidar 1000 according to an embodiment of the present disclosure. For example, in an example shown in FIG. 7, the optical fiber array 114 may include a substrate 1141a and a cover plate 1142a. The substrate 1141a is formed with a groove portion 1144 thereon. The groove portion 1144 includes a plurality of placement grooves 1145 disposed in sequence in the second direction (shown as a direction W in FIG. 7), each of the placement grooves 1145 allowing the disposition of one of the output optical fibers 1143, and a groove spacing w1 between two adjacent ones of the placement grooves 1145 in the second direction W being equal to a diameter d of the output optical fiber 1143. The groove portion 1144 is configured to allow the placement of the plurality of rows of output optical fibers 1143, which are arranged in the first direction (shown as a direction L in FIG. 7), with two adjacent rows of output optical fibers 1143 being in contact. The cover plate 1142a is pressed onto the substrate 1141a and one of the rows of output optical fibers 1143, so as to firmly press the output optical fibers 1143 to prevent the output optical fibers 1143 from moving.

As shown in FIG. 7, for example, there are two rows of output optical fibers 1143 in the groove portion 1144. Because the groove spacing w1 between two adjacent placement grooves 1145 in the second direction W is equal to the diameter d of the output optical fiber 1143, each placement groove 1145 allows the disposition of one output optical fiber 1143. The output optical fibers 1143 placed in the placement grooves 1145 can be arranged in a row, and every two adjacent output optical fibers 1143 in the row press against each other. The rest of the output optical fibers 1143 are arranged in the other row in the second direction W. Every two adjacent output optical fibers 1143 in the other row press against each other, and the other row of output optical fibers 1143 are located between the cover plate 1142a and the row of output optical fibers 1143 placed in the placement grooves 1145, where the two rows of output optical fibers press against each other.

The two layers of output optical fibers 1143 are staggered in the second direction W, so that any one of the output optical fibers 1143 in each row can be in contact with two output optical fibers 1143 in the adjacent other row.

In this example, the optical fiber array 114 has a plurality of rows of output optical fibers 1143 arranged in the first direction L, and two adjacent rows of output optical fibers 1143 are in contact. Here, a center-to-center distance x1 between an output optical fiber 1143a and an output optical fiber 1143b in the second direction W may be used as the first spacing, and the first spacing x1 = d/2. The second spacing is a center-to-center distance between two adjacent output optical fibers 1143 in either of the two rows. For example, a center-to-center distance x2 between the output optical fiber 1143a and an output optical fiber 1143c in the second direction may be used as the second spacing, and x2 = w1 = d. Thus, x2 > x1. As such, a minimum of the optical pitch p between two adjacent split beams may be d/2.

At least three rows of output optical fibers 1143 may also be provided in the groove portion 1144, and every two adjacent rows of output optical fibers 1143 press against each other, so that the number of split beams can be effectively increased. In this example, the first spacing x1 = d/2.

It is worth noting that, in some embodiments, the optical fiber array 114 may also be provided with a plurality of substrates 1141a and a plurality of cover plates 1142a, and the plurality of substrates 1141a and the plurality of cover plates 1142a are stacked in sequence. As such, the number of output optical fibers 1143 can be further increased, so as to increase the splitting ratio of the optical fiber array 114. By designing a staggered distance in the second direction of the placement grooves 1145 on two adjacent substrates 1141a to be less than d/2, the first spacing in this embodiment can be further reduced to less than d/2, so that the optical pitch p between two adjacent split beams can be reduced to less than d/2.

FIG. 8 is a schematic sectional view of yet another optical fiber array 114 in a lidar 1000 according to an embodiment of the present disclosure. For example, in an example shown in FIG. 8, the optical fiber array 114 may include a substrate 1141b and two cover plates 1142b. The substrate 1141b has a first side and a second side opposite in a thickness direction, the first side is provided with a plurality of first accommodating grooves 1146 disposed in sequence in the second direction, and the second side is provided with a plurality of second accommodating grooves 1147 disposed in sequence in the second direction.

A groove spacing w2 between two adjacent first accommodating grooves 1146 in the second direction W is equal to the diameter d of the output optical fiber 1143, and each first accommodating groove 1146 allows the disposition of one output optical fiber 1143. The output optical fibers 1143 placed in the first accommodating grooves 1146 can be arranged in a row, and every two adjacent output optical fibers 1143 in the row press against each other. Likewise, a groove spacing w3 between two adjacent second accommodating grooves 1147 in the second direction W is equal to the diameter d of the output optical fiber 1143, and each second accommodating groove 1147 also allows the disposition of one output optical fiber 1143. The output optical fibers 1143 placed in the second accommodating grooves 1147 can be arranged in a row, and every two adjacent output optical fibers 1143 in the row press against each other.

The first accommodating grooves 1146 and the second accommodating grooves 1147 are staggered in the second direction W, and a groove spacing w4 between any one of the first accommodating grooves 1146 and an adjacent one of the second accommodating grooves 1147 in the second direction is less than a groove spacing w2 between two adjacent ones of the first accommodating grooves 1146 and than a groove spacing w3 between two adjacent ones of the second accommodating grooves 1147 in the second direction W.

The two cover plates 1142b cover the first side and the second side respectively, one of the cover plates 1142b presses onto the output optical fibers 1143 in the first accommodating grooves 1146 to prevent the row of output optical fibers 1143 from moving, and the other cover plate 1142b presses onto the output optical fibers 1143 in the second accommodating grooves 1147 to prevent the row of output optical fibers 1143 from moving.

In this example, the optical fiber array 114 also has a plurality of rows of output optical fibers 1143 arranged spaced in the first direction L. Here, the first spacing is equal to the groove spacing w4 in the second direction between any one of the first accommodating grooves 1146 and a second accommodating groove 1147 adjacent thereto, and the second spacing is equal to w2 and w3.

It is worth noting that, in some embodiments, the optical fiber array 114 may include a plurality of substrates 1141b and a plurality of cover plates 1142b, and every two cover plates 1142b press onto the first side and the second side of one of the substrates 1141b. As such, there may be at least four rows of output optical fibers 1143 in the optical fiber array 114, and the number of output optical fibers 1143 can be further increased, so as to improve the splitting ratio of the optical fiber array 114.

It can be seen in connection with FIGS. 7 and 8 and the foregoing description that, the optical fiber array 114 may be configured to have a plurality of rows of output optical fibers 1143, and two adjacent rows of output optical fibers 1143 are staggered, so that the first spacing is less than the second spacing. With such a design, the minimum of the center-to-center distance between two output optical fibers 1143 can be reduced to less than the diameter d of the output optical fiber 1143, and the optical pitch p between two adjacent split beams can be less than the diameter d of the output optical fiber 1143, thus facilitating the reduction of the divergence angles of the split beams and long-distance propagation of the split beams.

According to the foregoing description, it should be noted that, in the implementation where the optical splitter 112 is the integrated optical waveguide 113, the optical fiber array 114 is not required for the transmitter module 110, and the splitting is implemented by the integrated optical waveguide 113, so that the splitting ratio of the integrated optical waveguide 113 is not limited by the diameter of the optical fiber. With the structure of the integrated optical waveguide 113 designed flexibly according to the requirements and actual working conditions, the splitting ratio of the integrated optical waveguide 113 can far exceed the splitting ratio that can be achieved by the optical fiber array 114.

Moreover, the optical pitch p between the split beams decomposed by the integrated optical waveguide 113 is not limited by the diameter of the optical fiber, and by designing reasonably the positions of the outgoing points of the integrated optical waveguide 113, the minimum value that can be reached by the optical pitch p between the split beams decomposed by the integrated optical waveguide 113 can be less than the minimum value that can be reached by the optical pitch between the split beams decomposed by the optical fiber array 114.

For comparison, the optical fiber array 114 in the example shown in FIG. 7 is provided with only one row of placement grooves 1145, which is convenient for processing, while the optical fiber array 114 shown in the example in FIG. 8 is provided with a row of first accommodating grooves 1146 and a row of second accommodating grooves 1147. By designing the staggered distance in the second direction W between the first accommodating grooves 1146 and the second accommodating grooves 1147, the first spacing can be less than the diameter d of the output optical fiber 1143, and thus the optical pitch p can be further reduced to less than the diameter d of the output optical fiber 1143.

The substrate 1141 and the cover plate 1142 described above may both be made of glass or silicon, which is not limited in the embodiments of the present disclosure. The placement groove 1145, the first accommodating groove 1146, and the second accommodating groove 1147 described above may all be V-shaped. The precision requirement for V-shaped grooves is lower as compared to that for U-shaped grooves, thus facilitating the processing. In addition, the V-shaped grooves can restrict the displacement of the output optical fibers 1143 in the second direction W, when the output optical fibers 1143 are placed in the V-shaped grooves, so as to avoid impact on the structural stability of the optical fiber array 114 due to the movement of the output optical fibers 1143.

Still referring to FIGS. 2 to 6, on the basis of the above embodiments, the collimation assembly 115 may be a lens. Here, the lens may be a convex lens, or may be replaced by a curved mirror. A method for obtaining a lens is simple. Further, the collimation assembly 115 may include at least one first lens 1151 and at least one second lens 1152, and the first lens 1151 is located upstream of the second lens 1152 along the outgoing paths of the split beams. In other words, the collimation assembly 115 is a lens group consisting of a plurality of lenses. A plurality of first lenses 1151 may be provided, and the plurality of first lenses 1151 may form a lens array. Likewise, a plurality of second lenses 1152 may be provided, and the plurality of second lenses 1152 may also form a lens array.

As shown in FIG. 2, the first lens 1151 and the second lens 1152 may be disposed coaxially. The first lens 1151 can receive and collimate the split beams to obtain collimated beams 118a, divergence angles of which are less than divergence angles of the split beams. The second lens 1152 can receive and collimate the collimated beams 118a to obtain collimated beams 118b, divergence angles of which are less than divergence angles of the collimated beams 118a. As such, the split beams can be collimated a plurality of times by using the first lens 1151 and the second lens 1152, so as to obtain collimated beams 118 with small divergence angles as much as possible. Moreover, the second lens 1152 can also receive the echo beams 119 and converge the echo beams 119 to the receiver module 120. In other words, the second lens 1152 may be used as part of the transmitter module 110 and also as part of the receiver module 120.

In some embodiments, the first lens 1151 and the second lens 1152 may not be disposed coaxially, in which case, the first lens 1151 collimates the split beams to obtain the collimated beams 118, and the second lens 1152 receives the echo beams 119 and converge the echo beams 119 to the receiver module 120.

As described above in connection with FIG. 1, according to another aspect of the embodiments of the present disclosure, there is provided a transceiver module for a lidar, including a receiver module and a transmitter module described in any one of the above embodiments. The transmitter module is configured to emit collimated beams onto an object. The receiver module is configured to receive echo beams reflected or scattered by the object.

According to yet another aspect of the embodiments of the present disclosure, there is provided a lidar, including a transceiver module described in any one of the above embodiments, a scanning module, and a detector. The transceiver module includes a transmitter module and a receiver module. The scanning module is configured to direct collimated beams emitted from the transmitter module to scan the surroundings. The detector is configured to perform photoelectric conversion based on echo beams received by the receiver module.

The transceiver module for the lidar according to the embodiments of the present disclosure and the lidar including such a transceiver module may have various advantages described above based on the transmitter module.

According to a further aspect of the embodiments of the present disclosure, there is further provided a vehicle system, including a lidar described in any one of the above embodiments. The vehicle system according to the embodiments of the present disclosure has various advantages of the above transmitter module for the lidar.

Some example solutions of the present disclosure are described below.

Solution 1: A transmitter module for a lidar, the transmitter module including:
a laser emitter configured to emit a laser beam;
an optical splitter located in an outgoing path of the laser beam and configured to receive the laser beam and split the laser beam into a plurality of split beams; and
a collimation assembly located in outgoing paths of the split beams and configured to receive the split beams and collimate the split beams into collimated beams.

Solution 2: The transmitter module according to solution 1, where the optical splitter is an integrated optical waveguide.

Solution 3: The transmitter module according to solution 2, where the integrated optical waveguide has an incident end, through which the laser beam is emitted into the integrated optical waveguide, and an outgoing end, through which the plurality of split beams are emitted out;
the transmitter module further includes a first spot-size converter disposed inside the integrated optical waveguide and located at the incident end of the integrated optical waveguide; and/or the transmitter module further includes a second spot-size converter disposed inside the integrated optical waveguide and located at the outgoing end of the integrated optical waveguide.

Solution 4: The transmitter module according to any one of solutions 1 to 3, where the transmitter module further includes a coupling assembly disposed between the laser emitter and the optical splitter and configured to couple the laser beam into the optical splitter.

Solution 5: The transmitter module according to solution 4, where the coupling assembly includes a lens assembly.

Solution 6: The transmitter module according to any one of solutions 1 to 5, where the optical splitter includes an input optical fiber, a coupler, and an optical fiber array having a plurality of output optical fibers, the laser emitter is coupled to the coupler via the input optical fiber, and the coupler is connected to the plurality of output optical fibers.

Solution 7: The transmitter module according to solution 6, where the optical fiber array is configured to include a plurality of rows of output optical fibers arranged in a first direction, each row having a plurality of output optical fibers disposed in a second direction, output optical fibers in two adjacent rows are staggered, a minimum of a center-to-center distance between two of the output optical fibers in the second direction is a first spacing, and a minimum spacing between two adjacent ones of the output optical fibers in the same row in the second direction is a second spacing, the first spacing being less than the second spacing;
where the first direction is perpendicular to the second direction.

Solution 8: The transmitter module according to solution 6 or 7, where the optical fiber array includes:
a substrate formed with a groove portion including a plurality of placement grooves disposed in sequence in the second direction, each of the placement grooves allowing the disposition of one of the output optical fibers, and a groove spacing between two adjacent ones of the placement grooves in the second direction being equal to a diameter of the output optical fiber; and the groove portion is configured to allow the placement of the plurality of rows of output optical fibers, with two adjacent rows of output optical fibers being in contact; and
a cover plate pressed onto one of the rows of output optical fibers.

Solution 9: The transmitter module according to solution 6 or 7, where the optical fiber array includes:
a substrate having a first side and a second side opposite in a thickness direction, the first side being provided with a plurality of first accommodating grooves disposed in sequence in the second direction, the second side being provided with a plurality of second accommodating grooves disposed in sequence in the second direction, each of the first accommodating grooves and the second accommodating grooves allowing the disposition of one of the output optical fibers, and a groove spacing between two adjacent ones of the first accommodating grooves and a groove spacing between two adjacent ones of the second accommodating grooves being both equal to a diameter of the output optical fiber; and the first accommodating groove and the second accommodating groove are staggered in the second direction, and a groove spacing between any one of the first accommodating grooves and an adjacent one of the second accommodating grooves in the second direction is less than a groove spacing between two adjacent ones of the first accommodating grooves; and
two cover plates covering the first side and the second side respectively.

Solution 10: The transmitter module according to any one of solutions 1 to 9, where the collimation assembly is a lens.

Solution 11: The transmitter module according to any one of solutions 1 to 10, where the collimation assembly includes at least one first lens and at least one second lens, the first lens being located upstream of the second lens along the outgoing paths of the split beams.

Solution 12: A transceiver module for a lidar, including:
a transmitter module according to any one of solutions 1 to 11, configured to emit collimated beams onto an object; and
a receiver module configured to receive echo beams reflected or scattered by the object.

Solution 13: A lidar, including:
a transceiver module according to solution 12, including a transmitter module and a receiver module;
a scanning module configured to direct collimated beams emitted from the transmitter module to scan the surroundings; and
a detector configured to perform photoelectric conversion based on echo beams received by the receiver module.

Solution 14: A vehicle system, including: a lidar according to solution 13.

The foregoing descriptions are merely preferred embodiments of the present disclosure and explanations of the applied technical principles. Those skilled in the art should understand that the scope of the invention involved in the embodiments of the present disclosure is not limited to the technical solutions formed by specific combinations of the foregoing technical features, and shall also cover other technical solutions formed by any combination of the foregoing technical features or equivalent features thereof without departing from the foregoing inventive concept. For example, a technical solution formed by a replacement of the foregoing features with technical features with similar functions in the technical features disclosed in the embodiments of the present disclosure (but not limited thereto) also falls within the scope of the invention.

## Claims

1. A transmitter module for a lidar, comprising:
a laser emitter configured to emit a laser beam;
an optical splitter located in an outgoing path of the laser beam and configured to receive the laser beam and split the laser beam into a plurality of split beams; and
a collimation assembly located in outgoing paths of the split beams and configured to receive the split beams and collimate the split beams into collimated beams.

2. The transmitter module according to claim 1, wherein the optical splitter is an integrated optical waveguide.

3. The transmitter module according to claim 2, wherein the integrated optical waveguide has an incident end, through which the laser beam is emitted into the integrated optical waveguide, and an outgoing end, through which the plurality of split beams are emitted out; and
the transmitter module further comprises a first spot-size converter disposed inside the integrated optical waveguide and located at the incident end of the integrated optical waveguide; and/or the transmitter module further comprises a second spot-size converter disposed inside the integrated optical waveguide and located at the outgoing end of the integrated optical waveguide.

4. The transmitter module according to any one of claims 1 to 3, wherein the transmitter module further comprises a coupling assembly disposed between the laser emitter and the optical splitter and configured to couple the laser beam into the optical splitter.

5. The transmitter module according to claim 4, wherein the coupling assembly comprises a lens assembly.

6. The transmitter module according to one of claims 1 to 5, wherein the optical splitter comprises an input optical fiber, a coupler, and an optical fiber array having a plurality of output optical fibers, the laser emitter is coupled to the coupler via the input optical fiber, and the coupler is connected to the plurality of output optical fibers.

7. The transmitter module according to claim 6, wherein the optical fiber array is configured to comprise a plurality of rows of output optical fibers arranged in a first direction, each row having a plurality of output optical fibers disposed in a second direction, output optical fibers in two adjacent rows are staggered, a minimum of a center-to-center distance between two of the output optical fibers in the second direction is a first spacing, and a minimum spacing between two adjacent ones of the output optical fibers in the same row in the second direction is a second spacing, the first spacing being less than the second spacing;
wherein the first direction is perpendicular to the second direction.

8. The transmitter module according to claim 6 or 7, wherein the optical fiber array comprises:
a substrate formed with a groove portion comprising a plurality of placement grooves disposed in sequence in the second direction, each of the placement grooves allowing the disposition of one of the output optical fibers, and a groove spacing between two adjacent ones of the placement grooves in the second direction being equal to a diameter of the output optical fiber; and the groove portion is configured to allow the placement of the plurality of rows of output optical fibers, with two adjacent rows of output optical fibers being in contact; and
a cover plate pressed onto one of the rows of output optical fibers.

9. The transmitter module according to claim 6 or 7, wherein the optical fiber array comprises:
a substrate having a first side and a second side opposite in a thickness direction, the first side being provided with a plurality of first accommodating grooves disposed in sequence in the second direction, the second side being provided with a plurality of second accommodating grooves disposed in sequence in the second direction, each of the first accommodating grooves and the second accommodating grooves allowing the disposition of one of the output optical fibers, and a groove spacing between two adjacent ones of the first accommodating grooves and a groove spacing between two adjacent ones of the second accommodating grooves being both equal to a diameter of the output optical fiber; and the first accommodating groove and the second accommodating groove are staggered in the second direction, and a groove spacing between any one of the first accommodating grooves and an adjacent one of the second accommodating grooves in the second direction is less than a groove spacing between two adjacent ones of the first accommodating grooves; and
two cover plates covering the first side and the second side respectively.

10. The transmitter module according to any one of claims 1 to 9, wherein the collimation assembly is a lens.

11. The transmitter module according to any one of claims 1 to 10, wherein the collimation assembly comprises at least one first lens and at least one second lens, the first lens being located upstream of the second lens along the outgoing paths of the split beams.

12. A transceiver module for a lidar, comprising:
a transmitter module according to any one of claims 1 to 11, configured to emit collimated beams onto an object; and
a receiver module configured to receive echo beams reflected or scattered by the object.

13. A lidar, comprising:
a transceiver module according to claim 12, comprising a transmitter module and a receiver module;
a scanning module configured to direct collimated beams emitted from the transmitter module to scan the surroundings; and
a detector configured to perform photoelectric conversion based on echo beams received by the receiver module.

14. A vehicle system, comprising: a lidar according to claim 13.
